# EUROPEAN PATENT SPECIFICATION

(11) **EP 3 962 226 B1**
(45) Date of publication and mention of the grant of the patent: **27.08.2025**
(21) Application number: 19926063.9
(22) Date of filing: 25.04.2019
(51) Int. Cl.: H04W 36/30, H04W 76/00, H04W 8/18, H04W 24/04, H04W 76/30, H04W 88/06

(54) **ERROR CAUSE REPORTING METHOD AND DEVICE**
VERFAHREN UND VORRICHTUNG ZUR MELDUNG VON FEHLERURSACHEN
PROCÉDÉ ET DISPOSITIF DE RAPPORT DE CAUSE D'ERREUR

(43) Date of publication of application: 02.03.2022
(73) Proprietor: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2019/084276
(87) International publication number: WO 2020/215273

(56) References cited:
- CN-A- 101 621 865
- CN-A- 103 517 454
- CN-A- 103 747 493
- CN-A- 108 990 122
- US-A1- 2016 295 550
- US-A1- 2019 007 913
- US-B2- 9 609 683

## Description

### TECHNICAL FIELD

The present disclosure relates to the field of communication and in particular to methods for reporting an error cause, a terminal, and a base station.

### BACKGROUND

At present, there are more and more terminals capable of supporting multiple subscriber identification module (SIM) cards. A typical application scenario is illustrated below.

A commercial user has one private SIM card and one commercial SIM card, which are both placed in a same terminal; or, a common user has multiple private SIM cards and may select which SIM card is to be used based on service.

The multiple SIM cards supported by a same terminal may come from a same operator or different operators.

Sometimes, a terminal supporting multiple SIM cards may have the following problems.

Firstly, after a terminal has already establishes a radio resource control (RRC) connection with a corresponding base station through a first SIM card, when the terminal reads a paging message for paging a base station corresponding to a second SIM card or performs a corresponding measurement, a short interval of about 20 milliseconds between the terminal and the base station corresponding to the first SIM card will be generated. If the terminal supports multiple SIM cards, a cumulative long interval may be generated in each paging period.

Secondly, when deciding to switch to a cell corresponding to the second SIM card, the terminal needs to read corresponding system information, which may lead to a long interval of about 1 second between the terminal and the base station corresponding to the first SIM card. The base station corresponding to the first SIM card will regard it as an error. Till now, how the terminal and the base station will handle such situation is still pending.

Furthermore, when the terminal performs tracking area update (TAU) through the second SIM card, a longer time interval between the terminal and the base station corresponding to the first SIM card will be generated.

US96099683B2 discloses a method and apparatus for improved multi subscription operation.

### SUMMARY

The invention is defined in the independent claims. Particular embodiments are set out in the dependent claims.

Embodiments of the present disclosure provide methods and apparatuses for reporting an error cause.

The technical solutions according to the embodiments of the present disclosure have the following beneficial effects.

In the embodiments of the present disclosure, a terminal supporting multiple SIM cards records a target error cause of disconnecting an RRC connection with the first base station due to a target operation, and reports the target error cause to the first base station after completing the target operation and establishing a new RRC connection with the first base station. In this way, the first base station will no longer perform recovery for the target error cause, thus reducing network errors statistics.

In the embodiments of the present disclosure, the target operation executed by the second SIM card in an idle state in the terminal may include any one of reading a paging message from a second base station, reading a system message from the second base station, performing measurement and performing tracking area update. Because the terminal disconnects the RRC connection with the first base station due to execution of the above target operation, the terminal may record the target error cause to avoid triggering the first base station to perform a recovery mechanism for the target operation subsequently.

In the embodiments of the present disclosure, the terminal may report the recorded target error cause to a non-access stratum of the terminal, and subsequently report the target error cause to the first base station through the non-access stratum after re-establishing a new RRC connection with the first base station, leading to high availability.

In the embodiments of the present disclosure, after receiving the target error cause reported by the terminal supporting multiple SIM cards, the first base station may remove the target error cause from all error causes reported by the terminal, and thus perform recovery only for other error causes. In the above process, the number of times that the first base station performs recovery for the target error cause is eliminated, thereby reducing network errors statistics.

It should be understood that the above general descriptions and the subsequent detailed descriptions are merely illustrative and explanatory rather than limiting of the present disclosure.

### BRIEF DESCRIPTION OF THE DRAWINGS

The accompanying drawings, which are incorporated in and constitute a part of the present description, illustrate embodiments consistent with the present disclosure and serve to explain the principles of the present disclosure together with the description.
FIG. 1 is a schematic flowchart illustrating a method of reporting an error cause according to an embodiment of the present disclosure.
FIG. 2 is a schematic flowchart illustrating another method of reporting an error cause according to an embodiment of the present disclosure.
FIG. 3 is a schematic flowchart illustrating another method of reporting an error cause according to an embodiment of the present disclosure.
FIG. 4 is a schematic flowchart illustrating another method of reporting an error cause according to an embodiment of the present disclosure.
FIG. 5 is a block diagram illustrating an apparatus for reporting an error cause according to an embodiment of the present disclosure.
FIG. 6 is a block diagram illustrating another apparatus for reporting an error cause according to an embodiment of the present disclosure.
FIG. 7 is a block diagram illustrating another apparatus for reporting an error cause according to an embodiment of the present disclosure.
FIG. 8 is a structural schematic diagram illustrating an apparatus for reporting an error cause according to an embodiment of the present disclosure.
FIG. 9 is a structural schematic diagram illustrating another apparatus for reporting an error cause according to an embodiment of the present disclosure.

### DETAILED DESCRIPTION OF THE EMBODIMENTS

Exemplary embodiments will be described in detail herein, with the illustrations thereof represented in the drawings. When the following descriptions involve the drawings, like numerals in different drawings refer to like or similar elements unless otherwise indicated. The implementations described in the following embodiments do not represent all implementations consistent with the present disclosure. Rather, they are merely examples of apparatuses and methods consistent with some aspects of the present disclosure.

The terms used in the present disclosure are for the purpose of describing particular embodiments only, and are not intended to limit the present disclosure. The terms "a", "the" and "said" in their singular forms in the present disclosure and the appended claims are also intended to include plurality, unless clearly indicated otherwise in the context. It should also be understood that the term "and/or" as used herein refers to and includes any and all possible combinations of one or more of the associated listed items.

It is to be understood that although different information may be described using the terms such as first, second, third, etc. in the present disclosure, these information should not be limited to these terms. These terms are used only to distinguish the same type of information from each other. For example, the first information may also be referred to as the second information, and similarly, the second information may also be referred to as the first information. Depending on the context, the word "if" as used herein may be interpreted as "when" or "as" or "determining in response to".

A method of reporting an error cause according to an embodiment of the present disclosure is firstly introduced below from a terminal side.

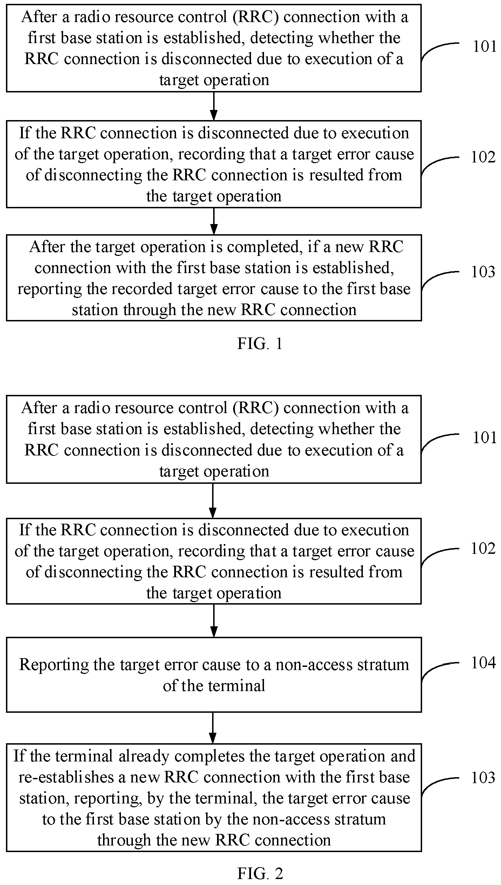

An embodiment of the present disclosure provides a method of reporting an error cause, which may be applied to a terminal supporting multiple subscriber identification module (SIM) cards. FIG. 1 is a flowchart illustrating a method of reporting an error cause according to an embodiment of the present disclosure. The method may include the following steps.

At step 101, after a radio resource control (RRC) connection with a first base station is established, whether the RRC connection is disconnected due to execution of a target operation is detected.

The first base station is a base station accessed by a first SIM card of the terminal, and the target operation is an operation executed by a second SIM card in an idle state in the terminal.

At step 102, if the RRC connection is disconnected due to execution of the target operation, it is recorded that a target error cause of disconnecting the RRC connection is resulted from the target operation.

At step 103, after the target operation is completed, if a new RRC connection with the first base station is established, the recorded target error cause is reported to the first base station through the new RRC connection.

In the above embodiment, the terminal supporting multiple SIM cards records the target error cause of disconnecting the RRC connection with the first base station due to the target operation, and reports the target error cause to the first base station after completing the target operation and establishing the new RRC connection with the first base station. In this way, the first base station will no longer perform recovery for the target error cause, thus reducing network errors statistics.

For the above step 101, if the terminal supporting multiple SIM cards already establishes a RRC connection with the first base station through the first SIM card, when the terminal detects that the RRC connection with the first base station is disconnected, the terminal may determine whether the disconnection is resulted from execution of the target operation.

The target operation is an operation executed by the second SIM card which is in an idle state and different from the first SIM card in the terminal. In some examples, the target operation may be an operation performed by the terminal to read a paging message from a second base station to be accessed by the second SIM card, or an operation for reading a system message from the second base station, or a measurement operation performed by using the second SIM card, or a tracking area update (TAU) operation performed by using the second SIM card.

The first SIM card and the second SIM card may belong to a same operator or different operators, which is not limited herein.

For the above step 102, if the terminal determines that the RRC connection with the first base station is disconnected due to execution of the target operation, the terminal records that the target error cause of disconnecting the RRC connection is resulted from the target operation.

For the above step 103, if the terminal completes the target operation and re-establishes a new RRC connection with the first base station, the terminal reports the previous target error cause to the first base station through the new RRC connection.

After receiving the target error cause, the first base station removes the target error cause from all error causes reported by the terminal and performs recovery only for other error causes based on a recovery mechanism.

On basis of FIG. 1, FIG. 2 is a flowchart illustrating another method of reporting an error cause according to an embodiment of the present disclosure. In an embodiment, after step 102 is completed, the method further includes step 104.

At step 104, the target error cause is reported to a non-access stratum of the terminal.

In this step, the terminal reports the target error cause to a high layer of the terminal, for example, the non-access stratum (NAS), after recording the target error cause.

Correspondingly, the step 103 specifically includes:
reporting, by the non-access stratum, the recorded target error cause to the first base station.

In the above embodiment, the terminal reports the target error cause to the non-access stratum of the terminal, and subsequently report the target error cause to the first base station through the non-access stratum after re-establishing a new RRC connection with the first base station, which brings about high availability.

A method of reporting an error cause according to an embodiment of the present disclosure is introduced below from a base station side.

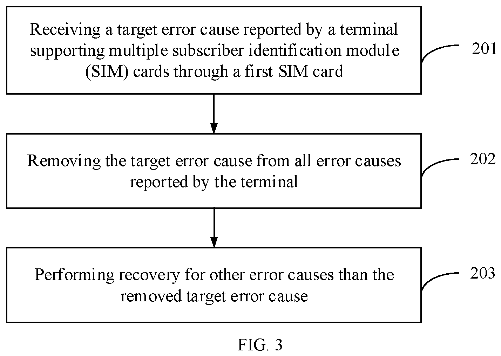

Based on the above method of reporting an error cause, an embodiment of the present disclosure further provides a method of reporting an error cause, which may be applied to a base station. The base station herein may be a first base station accessed by a first SIM card of a terminal. FIG. 3 is a flowchart illustrating a method of reporting an error cause according to an embodiment of the present disclosure. The method may include the following steps.

At step 201, a target error cause reported by a terminal supporting multiple subscriber identification module (SIM) cards through a first SIM card is received.

The target error cause indicates that the terminal previously disconnects a radio resource control (RRC) connection with the base station due to a target operation, where the target operation is an operation executed by a second SIM card in an idle state in the terminal.

At step 202, the target error cause is removed from all error causes reported by the terminal.

At step 203, recovery is performed for other error causes than the removed target error cause.

In the above embodiment, after receiving the target error cause reported by the terminal supporting multiple SIM cards, the first base station removes the target error cause from all error causes reported by the terminal, and thus perform recovery only for other error causes. In the above process, the number of times that the first base station performs recovery for the target error cause is eliminated, thereby reducing network errors statistics.

For the above step 201, after completing the target operation and re-establishing a new RRC connection with the first base station, the terminal reports the target error cause to the first base station by the NAS through the new RRC connection and the first base station directly receives the target error cause.

The target operation is an operation executed by the second SIM card which is in an idle state and different from the first SIM card in the terminal. In some examples, the target operation may be an operation for reading a paging message from a second base station to be accessed by the second SIM card, or an operation for reading a system message from the second base station, or a measurement operation performed by using the second SIM card, or a tracking area update (TAU) operation performed by using the second SIM card.

For the above step 202, the first base station removes the target error cause from all error causes reported by the terminal during a detection period of a preset time length.

For the above step 203, the first base station will no longer performs recovery for the RRC connection between the first base station and the terminal for the target error cause but for other error causes than the target error cause. Sometimes, the recovery is performed based on a recovery mechanism.

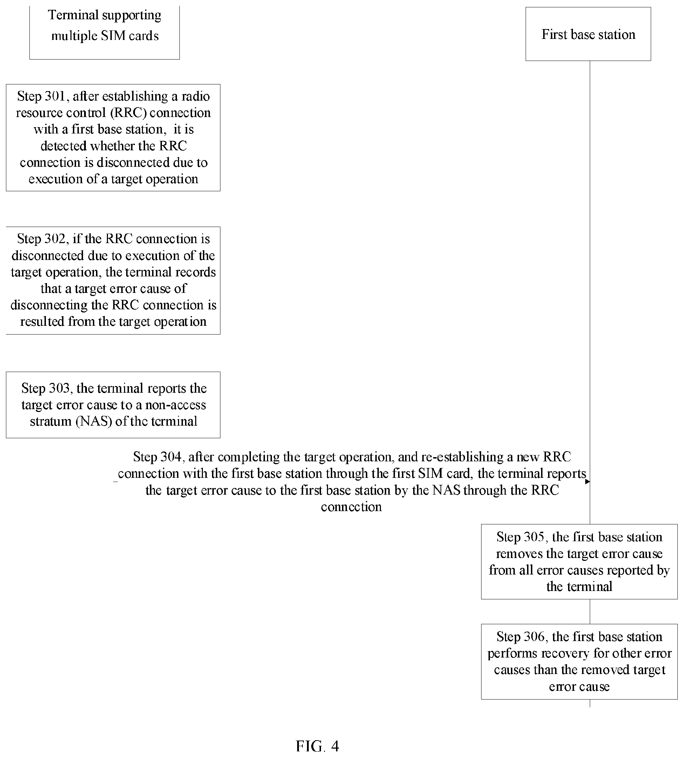

FIG. 4 is a flowchart illustrating a method of reporting an error cause according to an embodiment of the present disclosure. In an embodiment, the method includes the following steps.

At step 301, after establishing a radio resource control (RRC) connection with a first base station, a terminal supporting multiple subscriber identification module (SIM) cards detects whether the RRC connection is disconnected due to execution of a target operation.

The first base station is a base station accessed by a first SIM card of the terminal, and the target operation is an operation executed by a second SIM card in an idle state in the terminal.

The target operation may include any one of reading a paging message from a second base station, reading a system message from the second base station, performing measurement and performing tracking area update. The second base station is a base station to be accessed by the second SIM card.

At step 302, if the RRC connection is disconnected due to execution of the target operation, the terminal records that a target error cause of disconnecting the RRC connection is resulted from the target operation.

At step 303, the terminal reports the target error cause to a non-access stratum (NAS) of the terminal.

At step 304, after completing the target operation, and re-establishing a new RRC connection with the first base station through the first SIM card, the terminal reports the target error cause to the first base station by the NAS through the RRC connection.

At step 305, the first base station removes the target error cause from all error causes reported by the terminal.

At step 306, the first base station performs recovery for other error causes than the removed target error cause.

In the above embodiment, the terminal records the target error cause of disconnecting the RRC connection with the first base station due to the target operation, and reports the target error cause to the first base station by the NAS through a new RRC connection after completing the target operation and establishing the new RRC connection with the first base station. The first base station removes the target error cause from all error causes reported by the terminal and performs recovery only for other error causes, thus eliminating the number of times that the first base station performs recovery for the target error cause and reducing the network errors statistics.

Corresponding to the above method embodiments for realizing application functions, the present disclosure further provides embodiments of an apparatus for realizing application function and corresponding sender and receiver.

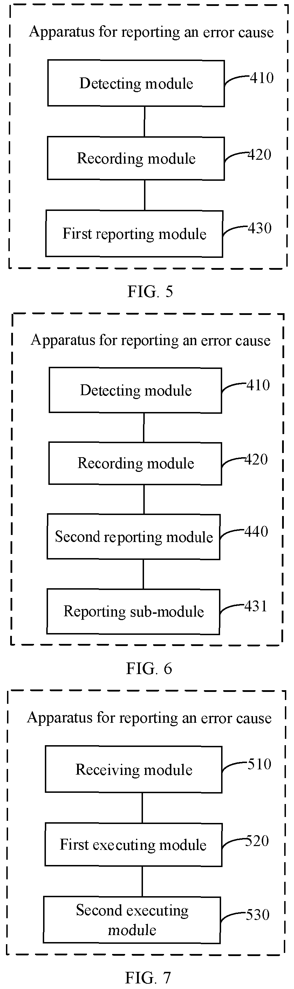

FIG. 5 is a block diagram illustrating an apparatus for reporting an error cause according to an embodiment of the present disclosure. The apparatus is applied to a terminal supporting multiple subscriber identification module (SIM) cards, and includes:
a detecting module 410, configured to, after a radio resource control (RRC) connection with a first base station is established, detect whether the RRC connection is disconnected due to execution of a target operation, wherein the first base station is a base station accessed by a first SIM card of the terminal, and the target operation is an operation executed by a second SIM card in an idle state in the terminal;
a recording module 420, configured to, if the RRC connection is disconnected due to execution of the target operation, record that a target error cause of disconnecting the RRC connection is resulted from the target operation;
a first reporting module 430, configured to, after the target operation is completed and if a new RRC connection with the first base station is established, report the recorded target error cause to the first base station through the new RRC connection.

FIG. 6 is a block diagram illustrating another apparatus for reporting an error cause based on the embodiment shown in FIG. 5. The apparatus further includes:
a second reporting module 440, configured to report the target error cause to a non-access stratum (NAS) of the terminal.

The first reporting module 430 includes:
a reporting sub-module 431, configured to report the recorded target error cause to the first base station through the NAS.

In some examples, the target operation includes any one of:
reading a paging message from a second base station, reading a system message from the second base station, performing measurement and performing tracking area update.

The second base station is a base station to be accessed by the second SIM card.

FIG. 7 is a block diagram illustrating another apparatus for reporting an error cause according to an embodiment of the present disclosure. The apparatus is applied to a first base station and includes:
a receiving module 510, configured to receive a target error cause reported by a terminal supporting multiple subscriber identification module (SIM) cards through a first SIM card; wherein the target error cause indicates that the terminal previously disconnects a radio resource control (RRC) connection with the base station due to a target operation, and the target operation is an operation executed by a second SIM card in an idle state in the terminal;
a first executing module 520, configured to remove the target error cause from all error causes reported by the terminal;
a second executing module 530, configured to perform recovery for other error causes than the removed target error cause.

In some examples, the target operation includes any one of:
reading a paging message from a second base station, reading a system message from the second base station, performing measurement and performing tracking area update.

The second base station is a base station to be accessed by the second SIM card.

Since the apparatus embodiments substantially correspond to the method embodiments, a reference may be made to part of the descriptions of the method embodiments for the related part. The apparatus embodiments described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

Correspondingly, the present disclosure further provides a computer readable storage medium storing computer programs. The computer programs are configured to implement any one of the above methods of reporting an error cause at the side of the terminal supporting multiple SIM cards.

Correspondingly, the present disclosure further provides a computer readable storage medium storing computer programs. The computer programs are configured to implement any one of the above methods of reporting an error cause at the side of the first base station.

Correspondingly, the present disclosure further provides an apparatus for reporting an error cause, not being part of the present invention. The apparatus is applied to a terminal supporting multiple subscriber identification module (SIM) cards and includes:
a processor;
a memory storing instructions executable by the processor;
wherein the processor is configured to:
   after a radio resource control (RRC) connection with a first base station is established, detect whether the RRC connection is disconnected due to execution of a target operation, wherein the first base station is a base station accessed by a first SIM card of the terminal, and the target operation is an operation executed by a second SIM card in an idle state in the terminal;
   if the RRC connection is disconnected due to execution of the target operation, record that a target error cause of disconnecting the RRC connection is resulted from the target operation;
   after the target operation is completed, if a new RRC connection with the first base station is established, report the recorded target error cause to the first base station through the new RRC connection.

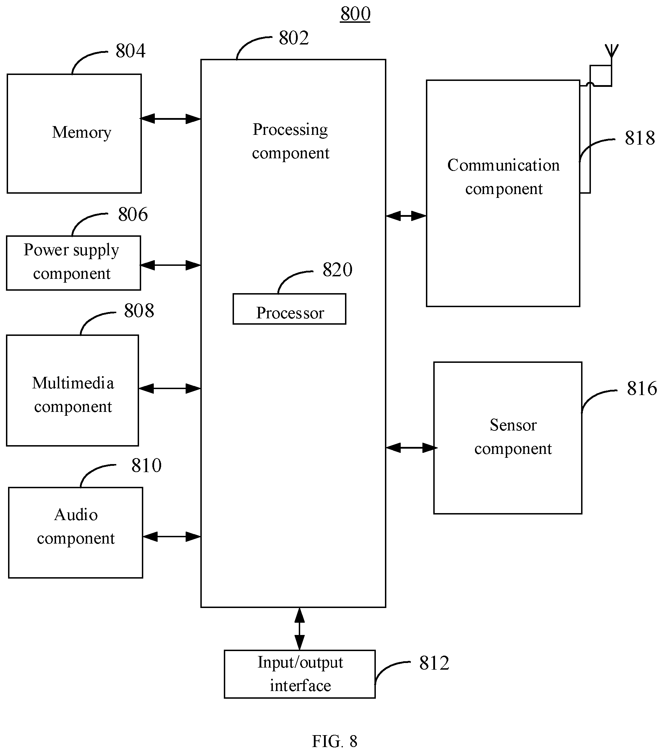

FIG. 8 is a block diagram illustrating an electronic device 800 supporting multiple subscriber identification module (SIM) cards according to an embodiment of the present disclosure. For example, the electronic device 800 may be smart phone, tablet computer, electronic book reader, multimedia player, wearable device and vehicle-mounted terminal and the like.

As shown in FIG. 8, the electronic device 800 may include one or more of a processing component 802, a memory 804, a power supply component 806, a multimedia component 808, an audio component 810, an input/output (I/O) interface 812, a sensor component 816, and a communication component 818.

The processing component 802 usually controls overall operations of the electronic device 800, such as operations associated with displaying, phone call, data communication, camera operation, and recording operation. The processing component 802 may include one or more processor 802 to execute instructions to complete all or part of the steps of the above methods. Further, the processing component 802 may include one or more modules to facilitate interaction between the processing component 802 and other components. For example, the processing component 802 may include a multimedia module to facilitate interaction between the multimedia component 808 and the processing component 802. For another example, the processing component 802 may read executable instructions from the memory to implement the steps of the method of reporting an error cause according to the above embodiments.

The memory 804 is configured to store various types of data to support the operation of the electronic device 800. Examples of such data include instructions for any application or method operated on the electronic device 800, contact data, phonebook data, messages, pictures, videos, and so on. The memory 804 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or compact disk.

The power supply component 806 supplies power for different components of the electronic device 800. The power supply component 806 may include a power supply management system, one or more power supplies, and other components associated with generating, managing and distributing power for the electronic device 800.

The multimedia component 808 includes a screen that provides an output interface between the electronic device 800 and a user. In some embodiments, the multimedia component 808 includes a front camera and/or a rear camera. When the electronic device 800 is in an operation mode, such as a shooting mode or a video mode, the front camera and/or the rear camera may receive external multimedia data. Each of the front and rear cameras may be a fixed optical lens system or have a focal length and an optical zoom capability.

The audio component 810 is configured to output and/or input audio signals. For example, the audio component 810 includes a microphone (MIC) configured to receive an external audio signal when the electronic device 800 is in an operation mode, such as a call mode, a recording mode, and a voice recognition mode. The received audio signal may be further stored in the memory 804 or transmitted via the communication component 818. In some embodiments, the audio component 810 also includes a loudspeaker for outputting an audio signal.

The I/O interface 812 provides an interface between the processing component 802 and a peripheral interface module which may be a keyboard, a click wheel, a button, or the like. These buttons may include, but are not limited to a home button, a volume button, a start button, and a lock button.

The sensor component 816 includes one or more sensors for providing a status assessment in various aspects to the electronic device 800. For example, the sensor component 816 may detect an open/closed state of the electronic device 800, and the relative positioning of components, for example, the component is a display and a keypad of the electronic device 800. The sensor component 816 may also detect a change in position of the electronic device 800 or a component of the electronic device 800, the presence or absence of contact between a user and the electronic device 800, the orientation or acceleration/deceleration of the electronic device 800 and a change in temperature of the electronic device 800. The sensor component 816 may include a proximity sensor configured to detect the presence of nearby objects without any physical contact. The sensor component 816 may also include a light sensor, such as a CMOS or CCD image sensor, for use in imaging applications. In some embodiments, the sensor component 816 may also include an acceleration sensor, a gyro sensor, a magnetic sensor, a pressure sensor, or a temperature sensor.

The communication component 818 is configured to facilitate wired or wireless communication between the electronic device 800 and other devices. The electronic device 800 may access a wireless network based on a communication standard, such as WiFi, 2G, 3G, 4G or 5G or a combination thereof. In an embodiment, the communication component 818 receives broadcast signals or broadcast associated information from an external broadcast management system via a broadcast channel. In an embodiment, the communication component 818 also includes a near field communication (NFC) module to facilitate short range communication. For example, the NFC module may be implemented based on a radio frequency identification (RFID) technology, an infrared data association (IrDA) technology, an ultrawide band (UWB) technology, a Bluetooth (BT) technology, and other technologies.

In an embodiment, the electronic device 800 may be implemented by one or more application specific integrated circuits (ASICs), digital signal processors (DSPs), digital signal processing devices (DSPDs), programmable logic devices (PLDs), a field programmable gate array (FPGA), a controller, a microcontroller, a microprocessor or other electronic elements for performing the above methods.

**In** an embodiment, there is further provided a non-transitory computer readable storage medium including instructions, for example, the memory 804 including instructions. The above instructions may be executed by the processor 820 of the electronic device 800 to implement the above method of reporting an error cause. For example, the non-transitory computer readable storage medium may be a read only memory (ROM), a random access memory (RAM), a CD-ROM, a magnetic tape, floppy disk, or optical data storage device or the like.

Correspondingly, the present disclosure further provides an apparatus for reporting an error cause, not being part of the invention. The apparatus is applied to a first base station and includes:
a processor;
a memory, storing instructions executable by the processor;
wherein the processor is configured to:
   receive a target error cause reported by a terminal supporting multiple subscriber identification module (SIM) cards through a first SIM card; wherein the target error cause indicates that the terminal previously disconnects a radio resource control (RRC) connection with the base station due to a target operation, and the target operation is an operation executed by a second SIM card in an idle state in the terminal;
   remove the target error cause from all error causes reported by the terminal;
   perform recovery for other error causes than the removed target error cause.

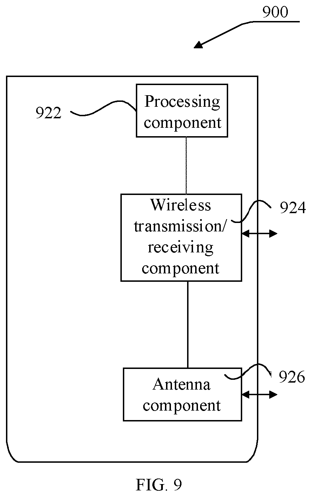

FIG. 9 is a structural schematic diagram illustrating an apparatus 900 for reporting an error cause according to an embodiment of the present disclosure. The apparatus 900 may be provided as a base station. As shown in FIG. 9, the apparatus 900 includes a processing component 922, a wireless transmission/receiving component 924, an antenna component 926, and signal processing part specific to a wireless interface. The processing component 922 may further include one or more processors.

One processor of the processing component 922 may be configured to implement any one of the above methods of reporting an error cause at the side of the first base station.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means that are not disclosed in the present disclosure. The specification and embodiments are considered as exemplary only.

## Claims

1. A method of reporting an error cause, **characterized by** comprising:
after establishing a radio resource control, RRC, connection between a terminal with a first base station, detecting (101), by the terminal, whether the RRC connection is disconnected due to execution of a target operation; wherein the terminal supports multiple subscriber identification module, SIM, cards, the first base station is a base station accessed by a first SIM card of the terminal, and the target operation is an operation executed by a second SIM card in an idle state in the terminal;
if the RRC connection is disconnected due to execution of the target operation, recording (102), by the terminal, that a target error cause of disconnecting the RRC connection is resulted from the target operation;
after the target operation is completed, if a new RRC connection with the first base station is established via the first SIM card, reporting (104), by the terminal, the recorded target error cause to the first base station via the first SIM card through the new RRC connection;
wherein after recording that the target error cause of disconnecting the RRC connection is resulted from the target operation, the method further comprises:
reporting internally in the terminal the target error cause to a non-access stratum of the terminal;
wherein reporting the recorded target error cause to the first base station comprises:
reporting, by the non-access stratum, the recorded target error cause to the first base station.

2. The method of claim 1, wherein the target operation comprises any one of:
reading a paging message from a second base station, reading a system message from the second base station, performing measurement and performing tracking area update;
wherein the second base station is a base station to be accessed by the second SIM card.

3. A method of receiving a reported error cause, comprising:
receiving (201), by a first base station, a target error cause reported by a terminal supporting multiple subscriber identification module, SIM, cards through a first SIM card; wherein the target error cause indicates that the terminal previously disconnects a radio resource control, RRC, connection between the first SIM card and the first base station due to a target operation, and the target operation is an operation executed by a second SIM card in an idle state in the terminal;
removing (202), by the first base station, the target error cause from all error causes reported by the terminal;
performing (203), by the first base station, recovery for the RRC connection for other error causes than the removed target error cause,
wherein the target error cause is reported by a non-access stratum of the terminal via a new RRC connection established between the first base station and the first SIM card after the target operation is completed.

4. The method of claim 3, wherein the target operation comprises any one of:
reading a paging message from a second base station, reading a system message from the second base station, performing measurement and performing tracking area update;
wherein the second base station is a base station to be accessed by the second SIM card.

5. A terminal supporting multiple subscriber identification module, SIM, cards, comprising:
a detecting module (410), configured to, after a radio resource control, RRC, connection between the terminal with a first base station is established, detect whether the RRC connection is disconnected due to execution of a target operation, wherein the first base station is a base station accessed by a first SIM card of the terminal, and the target operation is an operation executed by a second SIM card in an idle state in the terminal;
a recording module (420), configured to, if the RRC connection is disconnected due to execution of the target operation, record that a target error cause of disconnecting the RRC connection is resulted from the target operation;
a first reporting module (430), configured to, after the target operation is completed and if a new RRC connection with the first base station is established via the first SIM card, report the recorded target error cause to the first base station via the first SIM card through the new RRC connection; and
a second reporting module (440), configured to report the target error cause to a non-access stratum of the terminal;
wherein the first reporting module comprises:
a reporting sub-module (431), configured to report the recorded target error cause to the first base station by the non-access stratum through the new RRC connection.

6. The terminal of claim 5, wherein the target operation comprises any one of:
reading a paging message from a second base station, reading a system message from the second base station, performing measurement and performing tracking area update;
wherein the second base station is a base station to be accessed by the second SIM card.

7. A base station, comprising:
a receiving module (510), configured to receive a target error cause reported by a terminal supporting multiple subscriber identification module, SIM, cards through a first SIM card; wherein the target error cause indicates that the terminal previously disconnects a radio resource control, RRC, connection between the first SIM card and the base station due to a target operation, and the target operation is an operation executed by a second SIM card in an idle state in the terminal;
a first executing module (520), configured to remove the target error cause from all error causes reported by the terminal;
a second executing module (530), configured to perform recovery for the RRC connection for other error causes than the removed target error cause,
wherein the target error cause is reported by a non-access stratum of the terminal via a new RRC connection established between the base station and the first SIM card after the target operation is completed.

8. The base station of claim 7, wherein the target operation comprises any one of:
reading a paging message from another base station, reading a system message from the another base station, performing measurement and performing tracking area update;
wherein the another base station is a base station to be accessed by the second SIM card.

9. A computer readable storage medium, storing computer programs, wherein the computer programs comprise instructions which, when the program is executed by a processor of a terminal, cause the processor of the terminal to implement the method of reporting an error cause according to the above claim 1 or 2.

10. A computer readable storage medium, storing computer programs, wherein the computer programs comprise instructions which, when the program is executed by a processor of a base station, cause the processor of the base station to implement the method of receiving an error cause according to the above claim 3 or 4.

## Patentansprüche

1. Verfahren zur Fehlerursachenmeldung, **dadurch gekennzeichnet, dass** es die folgenden Schritte aufweist:
nach dem Herstellen einer Funkressourcenkontrollverbindung, RRC; zwischen einem Endgerät und einer ersten Basisstation, Erkennen (101), durch das Endgerät, ob die RRC-Verbindung aufgrund der Ausführung einer Ziel-Operation getrennt ist; wobei das Endgerät mehrere Subscriber Identification Module, SIM, -Karten unterstützt, die erste Basisstation eine Basisstation ist, auf welche eine erste SIM-Karte des Endgeräts zugreift, und die Ziel-Operation eine von einer zweiten SIM-Karte im Ruhezustand in dem Endgerät ausgeführte Operation ist;
wenn die RRC-Verbindung aufgrund der Ausführung der Ziel-Operation getrennt ist, Aufzeichnen (102) durch das Endgerät, dass eine Ziel-Fehlerursache des Trennens der RRC-Verbindung aus der Ziel-Operation resultiert;
nach dem Abschluss der Ziel-Operation, falls eine neue RRC-Verbindung mit der ersten Basisstation über die erste SIM-Karte hergestellt wird, Melden (104), durch das Endgerät, der aufgezeichneten Ziel-Fehlerursache an die erste Basisstation mittels der ersten SIM-Karte über die neue RRC-Verbindung;
wobei das Verfahren nach dem Aufzeichnen (102), dass die Ziel-Fehlerursache des Trennens der RRC-Verbindung aus der Ziel-Operation resultiert, ferner den folgenden Schritt aufweist:
intern in dem Endgerät erfolgendes Melden der Ziel-Fehlerursache an ein Non-Access-Stratum des Endgeräts;
wobei das Melden der aufgezeichneten Ziel-Fehlerursache an die erste Basisstation den folgenden Schritt aufweist:
Melden der aufgezeichneten Ziel-Fehlerursache an die erste Basisstation durch das Non-Access-Stratum.

2. Verfahren nach Anspruch 1, bei welchem die Ziel-Operation umfasst:
Lesen einer Paging-Nachricht von einer zweiten Basisstation, Lesen einer Systemnachricht von der zweiten Basisstation, Ausführen einer Messung und Ausführen eines Tracking-Bereichsupdates;
wobei die zweite Basisstation eine Basisstation ist, zu welcher der Zugang durch die zweite SIM-Karte erfolgt.

3. Verfahren zum Empfangen einer gemeldeten Fehlerursache mit den folgenden Schritten:
Empfangen (201), durch eine erste Basisstation, einer Ziel-Fehlerursache, welche von einem mehrere Subscriber Identification Module, SIM, -Karten unterstützenden Endgerät über eine erste SIM-Karte gemeldet wird, wobei die Ziel-Fehlerursache angibt, dass das Endgerät zuvor eine Funkressourcenkontrollverbindung, RRC, zwischen der ersten SIM-Karte und der ersten Basisstation aufgrund einer Ziel-Operation getrennt hat, und die Ziel-Operation eine von einer zweiten SIM-Karte im Ruhezustand in dem Endgerät ausgeführte Operation ist;
Entfernen (202) der Ziel-Fehlerursache aus allen von dem Endgerät gemeldeten Fehlerursachen durch die erste Basisstation;
Ausführen (203), durch die erste Basisstation, einer Wiederherstellung der RRC-Verbindung für andere Fehlerursachen als die entfernte Ziel-Fehlerursache,
wobei die Ziel-Fehlerursache durch ein Non-Access-Stratum des Endgeräts über eine neue RRC-Verbindung, welche zwischen der ersten Basisstation und der zweiten SIM-Karte hergestellt wird, nach dem Anschluss der Ziel-Operation gemeldet wird.

4. Verfahren nach Anspruch 3, bei welchem die Ziel-Operation umfasst:
Lesen einer Paging-Nachricht von einer zweiten Basisstation, Lesen einer Systemnachricht von der zweiten Basisstation, Ausführen einer Messung und Ausführen eines Tracking-Bereichsupdates;
wobei die zweite Basisstation eine Basisstation ist, zu welcher der Zugang durch die zweite SIM-Karte erfolgt.

5. Endgerät, welches mehrere Subscriber Identification Module, SIM, -Karten unterstützt, mit
einem Erkennungsmodul (410), das dazu ausgebildet ist, nach dem Herstellen einer Funkressourcenkontrollverbindung, RRC; zwischen einem Endgerät und einer ersten Basisstation, zu erkennen, ob die RRC-Verbindung aufgrund der Ausführung einer Ziel-Operation getrennt ist; wobei das Endgerät mehrere Subscriber Identification Module, SIM, -Karten unterstützt, die erste Basisstation eine Basisstation ist, auf welche eine erste SIM-Karte des Endgeräts zugreift, und die Ziel-Operation eine von einer zweiten SIM-Karte im Ruhezustand in dem Endgerät ausgeführte Operation ist;
einem Aufzeichnungsmodul (520), das dazu ausgebildet ist, wenn die RRC-Verbindung aufgrund der Ausführung der Ziel-Operation getrennt ist, aufzuzeichnen, dass eine Ziel-Fehlerursache des Trennens der RRC-Verbindung aus der Ziel-Operation resultiert;
einem ersten Meldemodul (430), das dazu ausgebildet ist, nach dem Abschluss der Ziel-Operation, falls eine neue RRC-Verbindung mit der ersten Basisstation über die erste SIM-Karte hergestellt wird, die aufgezeichnete Ziel-Fehlerursache an die erste Basisstation mittels der ersten SIM-Karte über die neue RRC-Verbindung zu melden; und
einem zweiten Meldemodul (440), das dazu ausgebildet ist, die Ziel-Fehlerursache an ein Non-Access-Stratum des Endgeräts zu melden;
wobei das erste Meldemodul aufweist:
ein Melde-Submodul (431), das dazu ausgebildet ist, die aufgezeichnete Ziel-Fehlerursache an die erste Basisstation durch das Non-Access-Stratum über die neue RRC-Verbindung zu melden.

6. Endgerät nach Anspruch 5, bei welchem die Ziel-Operation umfasst:
Lesen einer Paging-Nachricht von einer zweiten Basisstation, Lesen einer Systemnachricht von der zweiten Basisstation, Ausführen einer Messung und Ausführen eines Tracking-Bereichsupdates;
wobei die zweite Basisstation eine Basisstation ist, zu welcher der Zugang durch die zweite SIM-Karte erfolgt.

7. Basisstation mit:
einem Empfangsmodul (510), das dazu ausgebildet ist, eine Ziel-Fehlerursache, welche von einem mehrere Subscriber Identification Module, SIM, -Karten unterstützenden Endgerät über eine erste SIM-Karte gemeldet wird, zu empfangen; wobei die Ziel-Fehlerursache angibt, dass das Endgerät zuvor eine Funkressourcenkontrollverbindung, RRC, zwischen der ersten SIM-Karte und der ersten Basisstation aufgrund einer Ziel-Operation getrennt hat, und die Ziel-Operation eine von einer zweiten SIM-Karte im Ruhezustand in dem Endgerät ausgeführte Operation ist;
einem ersten Ausführungsmodul (520), das dazu ausgebildet ist, die Ziel-Fehlerursache aus allen von dem Endgerät gemeldeten Fehlerursachen zu entfernen;
einem zweiten Ausführungsmodul (530), das dazu ausgebildet ist, eine Wiederherstellung der RRC-Verbindung für andere Fehlerursachen als die entfernte Ziel-Fehlerursache durchzuführen,
wobei die Ziel-Fehlerursache durch ein Non-Access-Stratum des Endgeräts über eine neue RRC-Verbindung, welche zwischen der Basisstation und der ersten SIM-Karte hergestellt wird, nach dem Anschluss der Ziel-Operation gemeldet wird.

8. Basisstation nach Anspruch 7, bei welchem die Ziel-Operation umfasst:
Lesen einer Paging-Nachricht von einer anderen Basisstation, Lesen einer Systemnachricht von der zweiten Basisstation, Ausführen einer Messung und Ausführen eines Tracking-Bereichsupdates;
wobei die andere Basisstation eine Basisstation ist, zu welcher der Zugang durch die zweite SIM-Karte erfolgt.

9. Computerlesbares Speichermedium, das Computerprogramme speichert, wobei die Computerprogramme Befehle aufweisen, welche, bei Ausführung des Programms durch einen Prozessor eines Endgeräts, den Prozessor des Endgeräts veranlassen, das Verfahren zum Melden einer Fehlerursache nach dem obigen Anspruch 1 oder 2 zu implementieren.

10. Computerlesbares Speichermedium, das Computerprogramme speichert, wobei die Computerprogramme Befehle aufweisen, welche, bei Ausführung des Programms durch einen Prozessor einer Basisstation, den Prozessor der Basisstation veranlassen, das Verfahren zum Melden einer Fehlerursache nach dem obigen Anspruch 3 oder 4 zu implementieren.

## Revendications

1. Procédé de signalement d'une cause d'erreur, **caractérisé en ce qu'**il comprend:
après l'établissement d'une connexion de contrôle des ressources radio, RRC, entre un terminal avec une première station de base, la détection (101), par le terminal, si la connexion RRC est déconnectée du fait de l'exécution d'une opération cible; dans lequel le terminal prend en charge de multiples cartes de module d'identification d'abonné, SIM, la première station de base est une station de base accessible par une première carte SIM du terminal, et l'opération cible est une opération exécutée par une seconde carte SIM dans un état inactif dans le terminal;
si la connexion RRC est déconnectée du fait de l'exécution de l'opération cible, l'enregistrement (102), par le terminal, de ce qu'une cause d'erreur cible de déconnexion de la connexion RRC résulte de l'opération cible;
après que l'opération cible est terminée, si une nouvelle connexion RRC avec la première station de base est établie via la première carte SIM, le signalement (104), par le terminal, de la cause d'erreur cible enregistrée à la première station de base via la première carte SIM par l'intermédiaire de la nouvelle connexion RRC;
dans lequel, après l'enregistrement de ce que la cause d'erreur cible de déconnexion de la connexion RRC résulte de l'opération cible, le procédé comprend en outre:
le signalement interne dans le terminal de la cause d'erreur cible à une strate de non-accès du terminal;
dans lequel le signalement de la cause d'erreur cible enregistrée à la première station de base comprend:
le signalement, par la strate de non-accès, de la cause d'erreur cible enregistrée à la première station de base.

2. Procédé selon la revendication 1, dans lequel l'opération cible comprend l'une quelconque de:
la lecture d'un message de radiomessagerie provenant d'une seconde station de base, la lecture d'un message système provenant de la seconde station de base, la réalisation d'une mesure et la réalisation d'une mise à jour de zone de suivi;
dans lequel la seconde station de base est une station de base accessible par la seconde carte SIM.

3. Procédé de réception d'une cause d'erreur signalée, comprenant:
la réception (201), par une première station de base, d'une cause d'erreur cible signalée par un terminal prenant en charge de multiples cartes de module d'identification d'abonné, SIM, par l'intermédiaire d'une première carte SIM; dans lequel la cause d'erreur cible indique que le terminal a précédemment déconnecté une connexion de contrôle des ressources radio, RRC, entre la première carte SIM et la première station de base du fait d'une opération cible, et l'opération cible est une opération exécutée par une seconde carte SIM dans un état inactif dans le terminal;
le retrait (202), par la première station de base, de la cause d'erreur cible de toutes les causes d'erreur signalées par le terminal;
la réalisation (203), par la première station de base, d'une récupération pour la connexion RRC pour d'autres causes d'erreur que la cause d'erreur cible retirée,
dans lequel la cause d'erreur cible est signalée par une strate de non-accès du terminal via une nouvelle connexion RRC établie entre la première station de base et la première carte SIM après la fin de l'opération cible.

4. Procédé selon la revendication 3, dans lequel l'opération cible comprend l'une quelconque de:
la lecture d'un message de radiomessagerie provenant d'une seconde station de base, la lecture d'un message système provenant de la seconde station de base, la réalisation d'une mesure et la réalisation d'une mise à jour de zone de suivi;
dans lequel la seconde station de base est une station de base accessible par la seconde carte SIM.

5. Terminal prenant en charge de multiples cartes de module d'identification d'abonné, SIM, comprenant:
un module de détection (410) configuré pour, après qu'une connexion de contrôle des ressources radio, RRC, entre le terminal avec une première station de base est établie, détecter si la connexion RRC est déconnectée du fait de l'exécution d'une opération cible, dans lequel la première station de base est une station de base accessible par une première carte SIM du terminal, et l'opération cible est une opération exécutée par une seconde carte SIM dans un état inactif dans le terminal;
un module d'enregistrement (420), configuré pour, si la connexion RRC est déconnectée du fait de l'exécution de l'opération cible, enregistrer qu'une cause d'erreur cible de déconnexion de la connexion RRC résulte de l'opération cible;
un premier module de signalement (430), configuré pour, après que l'opération cible est terminée et si une nouvelle connexion RRC avec la première station de base est établie via la première carte SIM, signaler la cause d'erreur cible enregistrée à la première station de base via la première carte SIM par l'intermédiaire de la nouvelle connexion RRC; et
un second module de signalement (440), configuré pour signaler la cause d'erreur cible à une strate de non-accès du terminal;
dans lequel le premier module de signalement comprend:
un sous-module de signalement (431), configuré pour signaler la cause d'erreur cible enregistrée à la première station de base par la strate de non-accès par l'intermédiaire de la nouvelle connexion RRC.

6. Terminal selon la revendication 5, dans lequel l'opération cible comprend l'une quelconque de:
la lecture d'un message de radiomessagerie provenant d'une seconde station de base, la lecture d'un message système provenant de la seconde station de base, la réalisation d'une mesure et la réalisation d'une mise à jour de zone de suivi;
dans lequel la seconde station de base est une station de base accessible par la seconde carte SIM.

7. Station de base, comprenant:
un module de réception (510), configuré pour recevoir une cause d'erreur cible signalée par un terminal prenant en charge de multiples cartes de module d'identification d'abonné, SIM, par l'intermédiaire d'une première carte SIM; dans lequel la cause d'erreur cible indique que le terminal a précédemment déconnecté une connexion de contrôle des ressources radio, RRC, entre la première carte SIM et la station de base du fait d'une opération cible, et l'opération cible est une opération exécutée par une seconde carte SIM dans un état inactif dans le terminal;
un premier module d'exécution (520), configuré pour retirer la cause d'erreur cible de toutes les causes d'erreur signalées par le terminal;
un second module d'exécution (530), configuré pour réaliser une récupération pour la connexion RRC pour d'autres causes d'erreur que la cause d'erreur cible retirée,
dans lequel la cause d'erreur cible est signalée par une strate de non-accès du terminal via une nouvelle connexion RRC établie entre la station de base et la première carte SIM après que l'opération cible est terminée.

8. Station de base selon la revendication 7, dans laquelle l'opération cible comprend l'une quelconque de:
la lecture d'un message de radiomessagerie provenant d'une autre station de base, la lecture d'un message système provenant de l'autre station de base, la réalisation d'une mesure et la réalisation d'une mise à jour de zone de suivi;
dans lequel l'autre station de base est une station de base accessible par la seconde carte SIM.

9. Support de stockage lisible par ordinateur, stockant des programmes informatiques, dans lequel les programmes informatiques comprennent des instructions qui, lorsque le programme est exécuté par un processeur d'un terminal, amènent le processeur du terminal à mettre en œuvre le procédé de signalement d'une cause d'erreur selon la revendication 1 ou 2 ci-dessus.

10. Support de stockage lisible par ordinateur, stockant des programmes informatiques, dans lequel les programmes informatiques comprennent des instructions qui, lorsque le programme est exécuté par un processeur d'une station de base, amènent le processeur de la station de base à mettre en œuvre le procédé de réception d'une cause d'erreur selon la revendication 3 ou 4 ci-dessus.
